# EUROPEAN PATENT APPLICATION

(11) **EP 4 841 541 A1**
(43) Date of publication of application: **18.11.2026**
(21) Application number: 25176494.0
(22) Date of filing: 14.05.2025
(51) Int. Cl.: G06Q 20/14, G06Q 20/38, G06Q 30/04

(54) **SYSTEM AND METHOD FOR SECURING ELECTRIC VEHICLE CHARGING COMMUNICATIONS**

(71) Applicant: Siemens Aktiengesellschaft, 80333 München (DE)
(72) Inventor: CHAWLA, Astha, 560076 Bangalore (IN); SHETTY S, Ankita, 560067 Bengaluru (IN)
(74) Representative: Patentanwaltskanzlei WILHELM & BECK

(57) **Abstract**

A system (100) and method for securing electric vehicle charging communications is disclosed. The system comprises a hardware device (104) configured to receive a packet associated with at least one electric vehicle charging session and detect the initiation of the charging session based on parameters within the received packet. The hardware device (104) is further configured to determine the sufficiency of an allocated gas amount in a digital wallet (106) and generate a non-fungible token (NFT) linked specifically to the received packet upon confirming sufficient gas allocation. Additionally, a blockchain based smart contract (114) is configured to control the execution of the electric vehicle charging session by evaluating the NFT. The blockchain based smart contract (114) selectively drops suspicious packets based on the evaluation of the NFT, thereby mitigating distributed denial-of-service (DDoS) attack attempts directed at electric vehicle charging communications.

## Description

The present invention relates to the field of electric vehicle charging infrastructure and cybersecurity. More specifically, it pertains to systems and methods for securing communication protocols used in electric vehicle charging networks through the integration of blockchain technology, Non-Fungible Tokens (NFTs), and dynamic resource allocation mechanisms to enhance transaction authenticity, mitigate cyber threats, and optimize operational efficiency.

Increasing adoption of electric vehicles (EVs) worldwide has amplified the need for robust, secure, and efficient electric vehicle charging infrastructure. Central to this infrastructure is the communication between Electric Vehicle Charging Stations (EVCS) and Charging Station Management Systems (CSMS). These communications, often facilitated by the Open Charge Point Protocol (OCPP), are susceptible to several challenges, including unauthorized access, tampering, and distributed denial-of-service (DDoS) attacks.

Traditional methods for securing EV charging communications rely on pre-existing cryptographic tokens, static security measures, or centralized control mechanisms. These approaches, while effective in some cases, often fail to address evolving cyber threats, such as botnet-driven DDoS attacks, and lack the flexibility to dynamically allocate computational resources or detect anomalous behaviors. Additionally, conventional systems lack integration with blockchain technology for secure, tamper-proof records of charging events, leaving them vulnerable to forgery or manipulation.

As electric vehicle charging infrastructure expands and becomes increasingly interconnected, the risk and impact of Distributed Denial-of-Service (DDoS) attacks are amplified. Modern charging networks, relying on standardized communication protocols like OCPP, expose multiple points of entry for cyber attackers to exploit. In particular, amplified DDoS attacks can overwhelm charging station networks by flooding them with massive volumes of malicious packets, often leveraging botnets or compromised edge devices. This not only depletes computational and network resources, leading to service outages, but can also disrupt energy delivery, billing accuracy, and user trust. The potential for attack amplification arises from the ability of adversaries to generate large-scale, automated traffic - often by spoofing or replaying requests - far exceeding what traditional static defenses or rate-limiting filters can handle. As a result, the threat of amplified DDoS attacks poses a critical challenge to the security, reliability, and resilience of modern electric vehicle charging systems.

The amplification of DDoS attacks within electric vehicle charging infrastructure is a significant and growing threat. Notably, attack models such as MaDEVIoT (Manipulation of Demand via loT) have demonstrated how coordinated cyberattacks can leverage compromised loT devices-including EV charging stations-to manipulate energy demand and destabilize the power grid. Research indicates that current charging stations can be compromised and disconnected from central charging station management systems with relative ease, turning them into remotely controllable "dumb" chargers. Malicious actors can exploit these weaknesses to orchestrate large-scale, synchronized control of high-wattage EV charging stations, abruptly and massively increasing electricity consumption. The MaDEVIoT attack, for example, involves simultaneously switching ON of compromised chargers, which can trigger dramatic frequency excursions and voltage deviations, potentially exceeding system protection thresholds and causing generator disconnections that may cascade into widespread blackouts. As cities expand their EV charging networks, the feasibility and potential impact of MaDEVIoT-style attacks continue to rise. Existing server-side defenses are inadequate against such attacks, as they do not address the risk of disconnected charging stations being used in masses to disrupt the grid. Therefore, developing and implementing advanced cybersecurity frameworks and standardized protocols is essential to prevent DDoS attack amplification-such as that seen in MaDEVIoT scenarios-protect grid stability, and ensure the secure and reliable operation of EV charging networks. This invention directly addresses these concerns by proposing mechanisms to detect, limit, and prevent the amplification of DDoS attacks in EV charging infrastructure.

Thus, it is an object of the present invention to provide a method and system for securing electric vehicle charging communications.

The object of the present disclosure is achieved by a method for securing electric vehicle charging communications. Electric vehicle charging communications refer to data exchange between electric vehicle charging stations (EVCS), charging station management systems (CSMS), and associated components to facilitate secure and efficient charging operations. The communications include Open Charge Point Protocol (OCPP) packets, Non-Fungible Tokens (NFTs), and gas allocation mechanisms that ensure verifiability, authenticity, and protection against malicious activity.

The method comprises receiving, by the hardware device, a plurality of OCPP packets including Authorization Request, Start Charging Request, and Stop Charging Request at an EVCS. These packets encapsulate commands, requests, and operational data necessary to initiate and manage charging sessions. For example, an Authorization Request verifies a user credentials, a Start Charging Request initiates power delivery to the connected electric vehicle, and a Stop Charging Request terminates the charging session and finalizes the transaction.

The method further comprises detecting, by the hardware device, initiation of an electric vehicle charging session by monitoring parameters within each received OCPP packet. Parameters such as session identifiers, timestamps, and authorization credentials signal the start of a charging session. For instance, the hardware device identifies a Start Charging Request within the packet and interprets metadata to confirm session initiation.

The method further comprises determining, by the hardware device, if a digital wallet has sufficient gas allocation before proceeding with blockchain transactions. Gas represents computational resources required for blockchain operations, such as minting NFTs and processing OCPP packets. The hardware device evaluates the gas balance in the digital wallet against predefined thresholds to ensure adequate resources are available for secure transactions.

The method further comprises generating, by the hardware device, an NFT attached to an OCPP packet when the digital wallet possesses an adequate gas balance. NFTs serve as cryptographic assets that uniquely identify and authenticate communication events. For example, the hardware device generates an NFT containing metadata such as packet type, timestamps, and session identifiers, ensuring the packet authenticity and tamper-evident security.

The method further comprises receiving, by the digital wallet, an allocated amount of gas periodically. The gas allocation supports blockchain operations, enabling minting of NFTs and verification of packets during charging sessions. For example, the digital wallet receives gas units proportional to the expected computational effort for processing OCPP packets.

The method further comprises controlling, by the charging station management system, allocation of gas supply by evaluating usage against a plurality of operational thresholds. Operational thresholds define limits for gas consumption during blockchain transactions, ensuring efficient resource management and preventing excessive usage.

The method further comprises receiving, by the blockchain based smart contract, each OCPP packet transmitted from the hardware device along with associated NFT in the demilitarized zone (DMZ) of the CSMS. The DMZ isolates sensitive components from external networks, ensuring secure communication flow. The smart contract validates the authenticity of incoming NFT-linked packets before processing them further.

The method further comprises detecting, by the blockchain based smart contract, abnormal packet transmission rates by analyzing a plurality of incoming NFT-verified OCPP packets. Abnormal transmission rates refer to deviations from predefined thresholds, such as excessively high packet frequencies that may indicate malicious activity. For example, the smart contract detects continuous packet transmissions every millisecond during a denial-of-service attack attempt.

The method further comprises determining, by the blockchain based smart contract, the authenticity of each NFT by comparing blockchain signatures and gas consumption parameters against preset thresholds. Authenticity is evaluated by verifying cryptographic signatures embedded in the NFT and ensuring that gas usage aligns with legitimate transaction patterns. For example, the smart contract confirms that NFT signature matches a public key of the hardware device and checks that gas consumption falls within acceptable ranges.

The method further comprises controlling, by the blockchain based smart contract, execution of the charging session by dropping any suspicious OCPP packet when an excess in gas consumption or abnormal transmission is determined. Suspicious packets are flagged based on criteria such as OCPP packets without linked NFTs, invalid NFT signatures, excessive gas usage, or irregular transmission intervals. For example, the smart contract rejects packets with mismatched metadata or those transmitted outside operational thresholds.

The method further comprises outputting, by the blockchain based smart contract, an alert to the CSMS upon detecting abnormal network behavior from the received NFT-associated packets or upon receiving OCPP packets without linked NFTs. Alerts communicate critical information such as timestamps, session identifiers, and detected anomalies, enabling the CSMS to implement countermeasures. For example, the CSMS receives an alert about abnormal packet transmission rates and temporarily isolates affected EVCS units.

The method further comprises receiving, by the CSMS, filtered and validated OCPP packets from the smart contract for further managing of the charging operations. The CSMS processes these packets to manage charging sessions, ensuring that only authenticated and verified communication events are executed. For instance, the CSMS manages energy delivery based on validated Start Charging Requests.

The method further comprises controlling, by the CSMS, display of log entries that record NFT-generated transactions obtained from the ledger and transmitting management commands to the EVCS units. Log entries provide detailed records of blockchain transactions, including metadata linking NFTs to charging sessions. For example, the CSMS displays a log showing timestamps and gas consumption for processed packets and sends commands to the EVCS.

The method further comprises receiving, by the alert system, alerts transmitted by the smart contract and generating real-time notifications to system operators regarding abnormal events. Notifications enhance operator responsiveness by providing actionable insights into network activity. For instance, the alert system displays a notification about detected denial-of-service attack attempts, prompting operators to implement security measures.

The method further comprises receiving, by the wallet recharge mechanism, gas usage information derived from available communication channel bandwidths and normal operational patterns of previously processed electric vehicle charging sessions throughout the day to trigger replenishment of gas in the digital wallet. Historical data is analyzed to predict future gas requirements and adaptively allocate resources. For example, the wallet recharge mechanism identifies average gas consumption per session and schedules refills accordingly.

The method further comprises controlling, by the wallet recharge mechanism, movement of gas allocation by preventing refills to restore operations and extricating attack attempts through rapid gas depletion when malicious OCPP transmissions are detected. For instance, the wallet recharge mechanism stops gas allocation to counteract abnormal transmission rates and raises an alarm to the CSMS.

The object of the present disclosure is achieved by a system for securing electric vehicle charging communications using blockchain technology, digital wallets, and smart contracts. The system facilitates secure and efficient data exchange between electric vehicle charging stations (EVCS), charging station management systems (CSMS), and associated components, ensuring authenticity, verifiability, and protection against malicious activity such as distributed denial-of-service (DDoS) attacks.

The system comprises a hardware device configured to receive packets associated with at least one electric vehicle charging session and detect the initiation of the charging session based on parameters within the received packets. For example, the hardware device identifies session initiation by analyzing metadata such as timestamps, session identifiers, and user authentication credentials embedded within a Start Charging Request packet.

The hardware device is further configured to determine the sufficiency of an allocated gas amount in a digital wallet before proceeding with blockchain transactions. Gas represents computational resources required for blockchain operations, such as minting Non-Fungible Tokens (NFTs) and validating Open Charge Point Protocol (OCPP) communications. The hardware device verifies that the digital wallet contains adequate gas reserves to support secure transactions.

Upon determining sufficient gas allocation, the hardware device generates an NFT specifically linked to the received packet. NFTs serve as unique cryptographic assets that authenticate and track communication events within the electric vehicle charging session. For example, an NFT includes metadata such as packet type, session identifiers, and timestamps, ensuring authenticity and tamper-evident security of the packet.

The system further comprises a blockchain based smart contract configured to control execution of the electric vehicle charging session by evaluating the NFT linked to each packet. The smart contract autonomously verifies the authenticity of the NFT using blockchain-based cryptographic signatures and operational thresholds. Suspicious packets, such as those with missing or invalid NFTs, excessive gas consumption, or abnormal transmission rates, are selectively dropped to mitigate DDoS attack attempts and protect the charging infrastructure.

The system further comprises a charging station management system (CSMS) configured to control allocation of gas based on evaluation of a plurality of operational usage thresholds. These thresholds define limits for gas consumption during blockchain transactions, ensuring efficient resource management and preventing excessive depletion. For example, the charging station management system (CSMS) is configured to monitor gas usage patterns during high-demand periods.

The system further comprises the blockchain based smart contract configured to detect abnormal transmission rates of packets by analyzing one or more NFT-linked packets associated with the charging session. Abnormal transmission rates, such as excessively frequent packet arrivals, may indicate malicious activity. For instance, the smart contract identifies deviations from expected transmission intervals and flags suspicious activity to prevent service disruptions.

The blockchain based smart contract is situated within a demilitarized zone (DMZ) to enhance security of the electric vehicle charging communication. The DMZ acts as a buffer zone, protecting sensitive components from external networks and unauthorized access. The smart contract receives NFT-linked packets transmitted from the hardware device and evaluates them within the isolated environment, ensuring robust protection of electric vehicle charging communication against cyber threats.

The system further comprises a charging station management system (CSMS) configured to control the display of logged transaction entries corresponding to NFT-linked blockchain records obtained from the ledger associated with the charging session. Logged transaction entries provide detailed insights into session activity, including timestamps, gas consumption, and user interactions. For example, the CSMS displays transaction records on a graphical user interface (GUI) and facilitates transparency for system administrators and operators.

The present disclosure is further described hereinafter with reference to illustrated embodiments shown in the accompanying drawings, in which:
- FIG. 1: is a block diagram of a electric vehicle charging system 100 in accordance with an embodiment of the present invention; and
- FIG 2: is a process flowchart illustrating an exemplary method for securing electric vehicle charging communications, according to an embodiment of the present disclosure.

Various embodiments are described with reference to the drawings, wherein like reference numerals are used to re-fer the drawings, wherein like reference numerals are used to refer to like elements throughout. In the following de-scription, for the purpose of explanation, numerous specific details are set forth in order to provide thorough understanding of one or more embodiments. It may be evident that such embodiments may be practiced without these specific details.

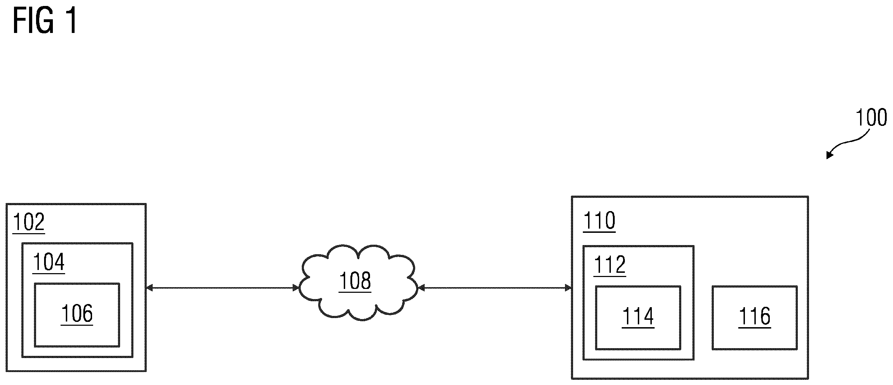

FIG. 1 is a block diagram of an electric vehicle charging system 100 in accordance with an embodiment of the present invention. The electric vehicle charging system 100 comprises an electric vehicle charging station 102, a network 108, and a cloud backend 110. The electric vehicle charging station 102 comprises a hardware device 104 which has a digital wallet 106. The cloud backend 110 comprises a demilitarized zone 112 and a blockchain based smart contract 114. The cloud backend 110 further comprises a charging station management system 116.

The electric vehicle charging system 100 comprises multiple interconnected components designed to facilitate secure and efficient charging of electric vehicles. The electric vehicle charging system 100 is designed to ensure seamless communication, robust cybersecurity, and reliable operation during electric vehicle charging sessions. The components of the electric vehicle charging system 100 work collaboratively to enable energy delivery, monitor charging progress, and safeguard data transmission. In one example, the electric vehicle charging system 100 may integrate advanced blockchain technology to enhance security and transparency.

The electric vehicle charging station 102 serves as a physical interface for connecting and charging electric vehicles. Examples of functionalities within the electric vehicle charging station 102 include initiating charging sessions, exchanging data packets, and delivering electrical power based on user preferences. The electric vehicle charging station 102 is designed to interact with the network 108 and the cloud backend 110, ensuring interoperability and secure communication during charging operations. The electric vehicle charging station 102 is equipped with hardware components to process data packets and execute operations efficiently. In one example, the electric vehicle charging station 102 may include an embedded controller for managing charging sessions.

The hardware device 104 is an embedded component within the electric vehicle charging station 102 responsible for executing critical functions during charging sessions. In one example, the hardware device 104 is a plug and play device. Examples of tasks performed by the hardware device 104 include monitoring data packets, ensuring adequate computational resources for secure communication, generating Non-Fungible Tokens (NFTs) and facilitating blockchain transactions for secure and tamper-proof communication. The hardware device 104 is designed to interact with the digital wallet 106 and blockchain-based systems to ensure the integrity and authenticity of data transmitted between the charging station and the cloud backend 110. The hardware device 104 operates as a central processing unit for secure communication protocols. In one example, the hardware device 104 may be a microcontroller integrated into a electric vehicle charging infrastructure.

The digital wallet 106 is a blockchain-enabled storage mechanism integrated into the hardware device 104. Examples of the functions of the digital wallet 106 include storing Gas Units and ensuring that blockchain transactions during the charging session are authenticated.

The network 108 provides the communication infrastructure for data exchange between the electric vehicle charging station 102 and the cloud backend 110. Examples of functions of the network 108 include transmitting Open Charge Point Protocol (OCPP) packets, enabling encrypted communication, and supporting interoperability across different charging systems. The network 108 is designed to ensure seamless and secure connectivity during electric vehicle charging operations. The network 108 acts as the channel through which packets are sent and received, enabling real-time monitoring and control of charging sessions. In one example, the network may utilize wireless protocols or Ethernet connections for data transmission.

The cloud backend 110 is a centralized or distributed infrastructure designed to manage and secure electric vehicle charging communications. Examples of the components within the cloud backend 110 include a demilitarized zone, the blockchain based smart contract, and a charging station management system. The cloud backend 110 is designed to validate packets, monitor charging sessions, and enforce cybersecurity measures across the charging network. The cloud backend 110 operates as central hub for processing data and executing blockchain transactions. In one example, the cloud backend 110 may leverage decentralized ledgers to enhance transparency and resilience against cyber threats.

The demilitarized zone 112 is a secure network segment within the cloud backend 110 that isolates sensitive components from external networks to enhance security. Examples of the functions performed by the demilitarized zone 112 include protecting the blockchain based smart contract, restricting unauthorized access, and monitoring network traffic for anomalies. The demilitarized zone 112 is designed to act as a buffer between internal systems of the electric vehicle charging infrastructure and public-facing networks, such as the internet. The demilitarized zone 112 ensures that critical components remain insulated from potential cyber threats. In one example, the demilitarized zone 112 may utilize firewalls, intrusion detection systems, and access controls to safeguard operations.

The blockchain based smart contract 114 is a self-executing program stored within the demilitarized zone 112 that autonomously validates and processes electric vehicle charging communications. Examples of functions of the blockchain based smart contract 114 include verifying Non-Fungible Token (NFT) authenticity, enforcing operational rules, and detecting abnormalities in packet transmission. The blockchain based smart contract 114 is designed to operate within a decentralized blockchain network, ensuring tamper-proof and transparent execution of logic, and logging transaction data linked to Non-Fungible Tokens (NFTs). The blockchain based smart contract 114 plays a pivotal role in maintaining the integrity and security of charging sessions. In one example, the blockchain based smart contract 114 may be programmed to reject fraudulent packets based on cryptographic evaluations.

The charging station management system 116 is a software platform within the cloud backend 110 responsible for overseeing the operation of a plurality of electric vehicle charging stations across the network 108. Examples of functions performed by the charging station management system 116 include real-time monitoring of charging sessions and transmitting management commands to stations. The charging station management system 116 is designed to ensure the reliability, security, and efficiency of the charging network. The charging station management system 116 provides administrators with tools to manage user access, optimize resource allocation, and respond to security alerts.

The hardware device 104 is configured to receive a packet associated with at least one electric vehicle charging session. In one example, the packet may be an Open Charge Point Protocol (OCPP) packet. Securing electric vehicle charging communications involves implementing robust cybersecurity measures that protect communication channels, prevent botnet-driven attacks, and maintain reliable operation of electric vehicle charging stations and associated systems. The hardware device 104 actively ensures that all communication events between the electric vehicle charging station 102 and the charging station management system 116 adhere to established protocols while being safeguarded against potential cyber threats.

The hardware device 104 is configured to serve as a physical component integrated into the electric vehicle charging station 102 infrastructure, designed to interact with incoming Open Charge Point Protocol (OCPP) packets and blockchain-based security mechanisms. The hardware device 104 actively monitors, and processes OCPP packets while generating Non-Fungible Tokens (NFTs) for each communication event to ensure verifiability and security. In one example, the hardware device 104 is programmed to detect charging session initiation, evaluate gas sufficiency in a digital wallet 106, and generate NFTs tied to each OCPP transaction. The hardware device 104 serves as a critical point of interaction between the electric vehicle charging station 102 and the blockchain-enabled security framework. In one example, the hardware device 104 is implemented as a microcontroller installed inside the electric vehicle charging station 102.

An example of the received packet is a standardized data packet used to facilitate communication between the electric vehicle charging station 102 and the charging station management system 116. The packet encapsulates operational commands, requests, and responses that govern a charging session, including actions such as authorization requests, start charging instructions, and stop charging commands. The packet ensures interoperability between electric vehicle charging stations and charging station management systems, allowing different manufacturers and operators to work seamlessly within a unified framework. The standardized structure of the packet is essential for maintaining consistency and reliability in electric vehicle charging operations.

The electric vehicle charging session begins when a user connects an electric vehicle to the electric vehicle charging station 102 and initiates a request for charging. The electric vehicle charging station 102 is configured to communicate with the charging station management system 116 by sending a packet that includes authorization credentials and charging preferences of a user. Upon successful verification of the request, the electric vehicle charging station 102 delivers electrical power to the connected electric vehicle based on one or more specified parameters. During the electric vehicle charging session, the electric vehicle charging station 102 exchanges packets with the charging station management system 116 to monitor charging progress, manage energy delivery, and ensure operational compliance. The electric vehicle charging session concludes when the user requests to stop charging, prompting the electric vehicle charging station 102 to send a corresponding packet to terminate the session and finalize a transaction based on charging performed.

The hardware device 104 is configured to identify a beginning of the electric vehicle charging session by analyzing the data contained within the packet. The hardware device 104 detects the initiation of the electric vehicle charging session by interpreting specific indicators embedded in the packet, which are transmitted between the electric vehicle charging station 102 and the charging station management system 116. The hardware device 104 actively monitors each incoming packet to identify the presence of one or more predefined parameters signaling the start of the electric vehicle charging session.

The one or more parameters within the packet that indicate the initiation of the electric vehicle charging session comprise operational details directly related to user interaction and charging station response. Another example of the one or more parameters includes a "Start Charging Request," which specifies a user command to begin delivering electrical power to a connected electric vehicle. The hardware device 104 is configured to evaluate parameters such as timestamp data, which provide an exact timing of charging session initiation, and session identification numbers, which uniquely identify a specific charging session. By analyzing the one or more parameters within the packet, the hardware device 104 detects the initiation of the electric vehicle charging session and ensures that every Open Charge Point Protocol packet sent to the charging station management system 116 is authenticated and accompanied by a uniquely generated Non-Fungible Token.

The hardware device 104 is configured to evaluate whether an allocated gas amount within the digital wallet 106 associated with the electric vehicle charging session is adequate to support blockchain-based transactions for the packet. Gas represents the computational currency or resource required to perform blockchain operations such as generating Non-Fungible Tokens. Gas is a measure of computational effort needed to execute a blockchain transaction, with each operation consuming a specific quantity of Gas Units. For example, minting a Non-Fungible Token may require a predetermined number of Gas Units, which are deducted from the digital wallet 106 upon successful execution of the transaction. Gas ensures that blockchain operations are limited and controlled, preventing excessive or malicious activity while maintaining the security and integrity of electric vehicle charging communications.

The digital wallet 106 is configured to serve as an embedded blockchain-enabled storage mechanism within the hardware device 104 that maintains the allocated gas amount for processing transactions during the electric vehicle charging session. The digital wallet 106 having a unique identification number, serves as the repository for Gas Units. The gas amount in the digital wallet 106 represents the computational currency required to execute blockchain transactions, with each transaction consuming a specific quantity of Gas Units depending on the complexity of the operation.

The charging station management system 116 is configured to allocate gas by monitoring the operational parameters of each electric vehicle charging station 102 and assigning Gas Units based on the expected transaction load for normal operations. The charging station management system 116 periodically replenishes the digital wallet 106 with Gas Units based on legitimate usage patterns, ensuring that the electric vehicle charging station 102 has adequate gas for ongoing communication events. Gas allocation is dynamically adjusted to correspond to the frequency and type of the packet processed during the electric vehicle charging session, while preventing excessive gas allocation that could facilitate malicious activity.

The hardware device 104 is configured to measure the sufficiency of the allocated gas amount by comparing the current gas balance in the digital wallet 106 against a predefined threshold required for generating Non-Fungible Tokens tied to each packet. Sufficiency is defined as the availability of a gas amount that meets or exceeds the minimum computational resource required to mint Non-Fungible Tokens and process blockchain transactions for Open Charge Point Protocol communications during the electric vehicle charging session. Without sufficient gas, the hardware device 104 halts the generation of Non-Fungible Tokens.

A parameter used to measure sufficiency is the amount of gas available in the digital wallet 106, expressed in "Gas Units," which represent computational effort within the blockchain system. For example, if a threshold to mint a single Non-Fungible Token is 50 Gas Units, the hardware device 104 is configured to determine that the digital wallet 106 contains at least 50 Gas Units before proceeding with a transaction. The hardware device 104 continuously monitors the balance of Gas Units in the digital wallet 106 and compares the balance to operational requirements for each charging session.

The hardware device 104 is configured to create a Non-Fungible Token (NFT) that is uniquely associated with the packet after verifying that the digital wallet 106 contains a sufficient allocated gas amount. The Non-Fungible Token is characterized by uniqueness and inability to be exchanged on a one-to-one basis with other tokens. Each Non-Fungible Token represents a distinct digital identifier that is immutable and verifiable, ensuring that every Open Charge Point Protocol packet processed during the electric vehicle charging session is securely authenticated.

The hardware device 104 attaches the Non-Fungible Token to the packet to provide a tamper-evident mechanism for validating authenticity of the packet and ensuring that the communication event is securely tracked. By embedding the Non-Fungible Token, the hardware device 104 ensures that each packet is uniquely identified and cannot be replicated or altered by malicious actors. The addition of the Non-Fungible Token protects against unauthorized data manipulation, interception, or injection, preserving the integrity of communications between the electric vehicle charging station 102 and the charging station management system 116.

The blockchain based smart contract 114 is configured to receive the Non-Fungible Token-linked packet, which is transmitted securely from the hardware device 104 to the demilitarized zone 112. The blockchain based smart contract 114 autonomously validates the authenticity of the packet by analyzing metadata embedded within the Non-Fungible Token. The demilitarized zone 112 including the blockchain based smart contract 114, isolates the charging station management system 116 from external threats, ensuring that malicious actors cannot compromise the communication flow or gain unauthorized access to sensitive systems.

The blockchain based smart contract 114 enhances security by leveraging the demilitarized zone 112 to separate the electric vehicle charging infrastructure from external networks. Placement of the blockchain based smart contract 114 within the demilitarized zone 112 ensures that even if external threats compromise the public-facing components of the network, the charging station management system 116 remains protected and insulated from direct attacks. Additionally, the blockchain based smart contract 114 enforces strict validation checks on incoming Non-Fungible Token-linked Open Charge Point Protocol packets, ensuring that only authenticated and authorized packets are processed further.

The blockchain based smart contract 114 is configured to verify the authenticity of each Non-Fungible Token linked to a plurality of packets transmitted during the electric vehicle charging session by assessing Non-Fungible Token signatures and gas consumption parameters against predefined operational thresholds. The blockchain based smart contract 114 evaluates cryptographic signatures embedded within each Non-Fungible Token to confirm integrity. If discrepancies are detected, the blockchain based smart contract 114 rejects the Non-Fungible Token and flags the packet for potential malicious activity, ensuring that compromised tokens are not processed.

The blockchain based smart contract 114 is configured to evaluate the gas consumption parameters tied to the generation and transmission of each Non-Fungible Token. The gas consumption parameters represent the computational effort and blockchain resources required to mint the Non-Fungible Token and execute blockchain transactions associated with the Open Charge Point Protocol (OCPP) packet. For example, the gas consumption parameters comprise the quantity of Gas Units consumed during creation of the Non-Fungible Token, the blockchain transaction fees incurred during transmission, and the computational cost of embedding metadata within the Non-Fungible Token. The blockchain based smart contract 114 determines whether the gas consumption parameters fall within acceptable ranges defined by operational thresholds to ensure that the Non-Fungible Token was generated under legitimate conditions.

A plurality of operational thresholds define maximum and minimum limits for various parameters, such as gas consumption and computational effort, required for the generation and validation of Non-Fungible Tokens. For instance, an operational threshold specifies that minting a Non-Fungible Token must consume gas units within a range between 40 and 60 Gas Units. The blockchain based smart contract 114 identifies a Non-Fungible Token as potentially fraudulent or improperly generated if gas consumption deviates significantly from the range and rejects the corresponding packet. Similarly, the plurality of operational thresholds may include timing constraints, such as requiring that Non-Fungible Tokens be minted within a specific time window relative to packet transmission timestamps, to prevent replay attacks or delayed token generation. By evaluating Non-Fungible Token signatures and the gas consumption parameters against operational thresholds, the blockchain based smart contract 114 ensures that every Non-Fungible Token transmitted during the electric vehicle charging session is authentic and securely generated. Thus, the blockchain based smart contract 114 safeguards the integrity of Open Charge Point Protocol communications and prevents unauthorized or malicious activity within the electric vehicle charging infrastructure.

The blockchain based smart contract 114 is configured to identify abnormal transmission rates of Open Charge Point Protocol packets by evaluating one or more Non-Fungible Token-linked packets associated with the electric vehicle charging session. The abnormal transmission rate refers to a frequency of packet transmission that deviates significantly from the plurality of operational thresholds established for secure and efficient communication within the electric vehicle charging infrastructure. For example, an abnormal transmission rate may involve an Open Charge Point Protocol packet being transmitted continuously every millisecond during a charging session, far exceeding the typical interval of several seconds or minutes between packets in normal operations.

The blockchain based smart contract 114 detects the abnormal transmission rate by monitoring timestamps of incoming Non-Fungible Token-linked packets and calculating the interval between consecutive packet transmissions. The blockchain based smart contract 114 is configured to compare the calculated intervals against expected ranges defined by operational thresholds. For instance, if the normal range for packet transmission intervals is 5 to 30 seconds, and packets are received at intervals shorter than one second, the blockchain based smart contract 114 is configured to flag the transmission rate as abnormal. Such deviations may indicate potential malicious behavior, such as denial-of-service attacks, or hardware malfunctions within the electric vehicle charging station 102.

In another example, the blockchain based smart contract 114 analyzes the Non-Fungible Token-linked packets using a rate-limiting detection algorithm designed to identify transmission anomalies. The rate-limiting detection algorithm is configured to calculate transmission intervals between consecutive packets by processing timestamps. The blockchain based smart contract 114 is configured to determine whether the transmission rate falls within normal operational thresholds or indicates an abnormal pattern. For example, if the rate-limiting detection algorithm is configured to receive timestamps indicating packet arrivals at 12:00:00.000, 12:00:00.500, and 12:00:01.000, the algorithm calculates transmission intervals of 0.500 seconds and 0.500 seconds. If the operational thresholds specify a minimum transmission interval of 2 seconds, the rate-limiting detection algorithm flags the intervals as abnormal and alerts the blockchain based smart contract 114.

By analyzing the Non-Fungible Token-linked packets using the rate-limiting detection algorithm, the blockchain based smart contract 114 continuously monitors and evaluates the NFTs against operational thresholds. Thus, the blockchain based smart contract 114 autonomously detects and mitigates abnormal transmission rates that could compromise the security and functionality of the electric vehicle charging communication system.

The blockchain based smart contract 114 is configured to control the execution of the electric vehicle charging session by evaluating packets and selectively discarding suspicious packets. Suspicious packets are discarded when they fail to meet one or more predefined criteria for authenticity, transmission rates, or operational thresholds. The blockchain based smart contract 114 is configured to identify suspicious packets by conducting exhaustive evaluations of the Non-Fungible Token associated with each packet, verifying cryptographic integrity, assessing gas consumption parameters, and analyzing transmission rates.

The suspicious packets are defined as packets that exhibit abnormal characteristics indicative of unauthorized access, malicious activity, or operational errors within the electric vehicle charging network. For instance, packets transmitted at an excessively high rate, packets containing corrupted or mismatched metadata, are categorized as suspicious. The blockchain based smart contract 114 is configured to mitigate distributed denial-of-service attacks by discarding suspicious packets before they impact the electric vehicle charging network.

Distributed denial-of-service attacks involve coordinated efforts by multiple malicious entities to overwhelm a target network or system by flooding it with excessive requests or packets, rendering services unavailable to legitimate users. For example, during a distributed denial-of-service attack, thousands of fraudulent Open Charge Point Protocol packets may be transmitted simultaneously from a charging station, aiming to exhaust computational resources and disrupt normal operations. The blockchain based smart contract 114 prevents such attacks by employing Non-Fungible Token evaluations, rate-limiting detection algorithms, and operational thresholds to distinguish legitimate packets from malicious ones.

The blockchain based smart contract 114 is configured to generate alerts directed to the charging station management system 116 upon identifying abnormal transmission rates. The blockchain based smart contract 114 transmits the alert through a secure communication channel that connects the blockchain infrastructure to the charging station management system 116. The alert includes detailed information, such as timestamps of detection, intervals between packets, and identification of the electric vehicle charging session involved.

The charging station management system 116 is configured to receive the alert and initiates countermeasures to protect the electric vehicle charging network. For instance, upon receiving the alert, the charging station management system 116 is configured to adjust security settings, such as increasing firewall protections, temporarily isolating affected charging stations, or suspending compromised charging sessions. The charging station management system 116 is configured to log the incident for forensic analysis and system improvements, enhancing the long-term resilience of the electric vehicle charging network.

The charging station management system 116 is configured to control the allocation of gas within the digital wallet 106 by performing an evaluation of a plurality of operational usage thresholds. Controlling the allocation of gas ensures that sufficient resources are available within the digital wallet 106 to support legitimate operations while preventing excessive consumption that could disrupt the electric vehicle charging session or compromise the functionality of charging station management system 116.

The blockchain based smart contract 114 is configured to evaluate the gas consumption parameters against the plurality of operational usage thresholds, which represent predefined limits for gas consumption and resource utilization within the electric vehicle charging network. For example, the plurality of operational usage thresholds may specify maximum allowable gas consumption per transaction, cumulative gas usage over a specified time period, or minimum gas reserves required to maintain system functionality. The blockchain based smart contract 114 ensures that gas consumption remains within the plurality of operational usage thresholds, taking corrective action if necessary.

An example of the plurality of operational usage thresholds includes a threshold that limits gas consumption for Non-Fungible Token minting to 5,000 Gas Units per transaction, a threshold that caps cumulative gas usage at 50,000 Gas Units per hour, and a threshold that requires the digital wallet 106 to maintain a minimum reserve of 10,000 Gas Units to ensure uninterrupted operations. If the plurality of operational usage thresholds are exceeded, the blockchain based smart contract 114 restricts or redistributes the allocation of gas within the digital wallet 106. The plurality of operational usage thresholds ensure efficient resource management, prevent resource exhaustion, and safeguard the electric vehicle charging network from operational disruptions caused by excessive gas consumption.

The blockchain based smart contract 114 is configured to perform gas allocation dynamically by monitoring consumption patterns and adjusting the flow of gas resources to specific blockchain operations. In one example, gas allocation is performed by a wallet recharge mechanism, which synchronizes gas refills to the digital wallet 106 to address rapid depletion during periods of high demand or malicious activity. The wallet recharge mechanism ensures that the electric vehicle charging network remains operational, preventing interruptions to critical processes such as packet validation and smart contract execution.

The wallet recharge mechanism is configured so that an administrator of the charging station management system 116 is notified the Gas Unit balance of digital wallet 106 periodically for each charging station 102. The wallet recharge mechanism synchronizes gas refills by coordinating the recharge process with real-time evaluations of the gas consumption parameters, operational and communication channel bandwidth thresholds. The wallet recharge mechanism ensures efficient operation and prevents resource exhaustion during normal operations.

The wallet recharge mechanism is configured to analyze gas usage information derived from normal operational patterns of one or more previously processed electric vehicle charging sessions. The wallet recharge mechanism leverages historical data to predict future gas requirements and adaptively allocate resources within the digital wallet 106. For example, if data from prior charging sessions shows that an average of 20,000 Gas Units is consumed per session, the wallet recharge mechanism allows the administrator to adjust replenishment quantities accordingly to maintain optimal reserves.

The charging station management system 116 is configured to control the display of logged transaction entries indicating Non-Fungible Token-linked blockchain records corresponding to at least one electric vehicle charging session. The logged transaction entries represent detailed records of blockchain transactions, including metadata linking the session to specific Non-Fungible Tokens, cryptographic signatures verifying authenticity, timestamps, and resource consumption data such as gas usage.

The charging station management system 116 retrieves the blockchain records from the blockchain infrastructure and presents them through a graphical user interface (GUI) designed for administrators or users. For example, the charging station management system 116 displays logged transaction entries on a dashboard categorized by user identity, charging station location, session duration, and associated Non-Fungible Tokens. By controlling the display of logged transaction entries, the charging station management system 116 provides stakeholders with transparent and verifiable records, enhancing accountability and operational efficiency.

The charging station management system 116 is configured to transmit one or more management commands to the electric vehicle charging station 102 based on logged Non-Fungible Token-linked transaction entries. The management commands ensure seamless operation, security, and resource optimization within the electric vehicle charging network.

The charging station management system 116 further transmits commands to take the electric vehicle charging station 102 offline if there are no logged transaction entries corresponding to the incoming OCPP packets which reveal abnormal activity, such as unauthorized access or excessive resource consumption indicating wallet reserve exhaustion. By leveraging verified blockchain records, the charging station management system 116 ensures that the transmitted management commands are based on authentic and tamper-proof data, reducing the risk of errors or unauthorized actions.

The charging station management system 116 dynamically responds to real-time conditions, such as adjusting operations during peak demand or addressing anomalies detected through the logged Non-Fungible Token-linked transaction entries. This capability enhances the reliability, efficiency, and user experience of the electric vehicle charging network while safeguarding against potential threats or disruptions.

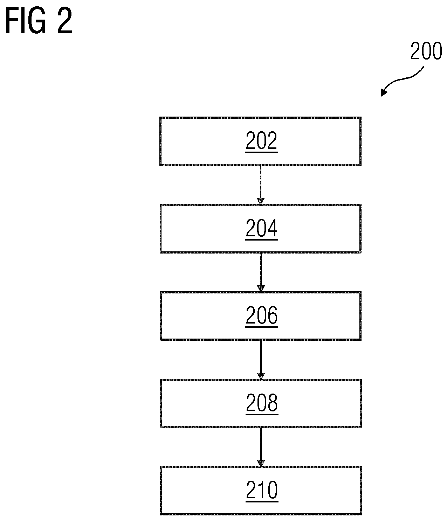

FIG 2 is a process flowchart illustrating an exemplary method for securing electric vehicle charging communications, according to an embodiment of the present disclosure. The method begins at step 202.

At step 202, a packet associated with at least one electric vehicle charging session is received by the hardware device 104. The packet encapsulates operational commands, requests, and responses that govern the charging session, including actions such as authorization requests and start charging instructions. The hardware device 104 is configured to receive standardized data packets like open charge point protocol (OCPP) packets to facilitate blockchain based communication between the electric vehicle charging station 102 and the charging station management system 116.

At step 204, the initiation of the electric vehicle charging session is detected by the hardware device 104 based on one or more parameters within the packet. Specific indicators, such as a "start charging request", are analyzed to determine the commencement of the charging session. The hardware device 104 actively monitors incoming packets to identify these predefined parameters, to initiate the generation of non-fungible tokens (NFTs).

At step 206, the sufficiency of an allocated gas amount in the digital wallet 106 associated with the electric vehicle charging session is determined by the hardware device 104. The digital wallet 106 maintains gas units, which represent the computational currency required for blockchain operations like generating non-fungible tokens (NFTS). By evaluating the current gas balance against predefined thresholds, the hardware device 104 ensures that there are adequate resources to support secure and authentic blockchain transactions during the charging session.

At step 208, a non-fungible token (NFT) linked specifically to the received packet is generated by the hardware device 104 upon determining the sufficiency of the allocated gas amount. Each NFT serves as a unique digital identifier that is immutable and verifiable, providing a tamper-evident mechanism for validating authenticity of the packet. The hardware device 104 attaches the NFT to the packet, ensuring that every communication event is securely tracked and protected against unauthorized manipulation.

At step 210, the execution of the electric vehicle charging session is controlled by evaluating the NFT using the blockchain based smart contract 114. This smart contract assesses the authenticity and validity of each NFT-linked packet, selectively dropping one or more suspicious packets that fail to meet predefined criteria. By doing so, the system mitigates distributed denial-of-service (DDOS) attack attempts, maintaining the security and reliability of the electric vehicle charging network108. The blockchain based smart contract 114 leverages operational thresholds and absence of NFT-linked packets to identify and reject malicious or abnormal packet transmissions.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.
1. **100** - Electric Vehicle Charging System
2. **102** - Electric Vehicle Charging Station
3. **104** - Hardware Device
4. **106** - Digital Wallet
5. **108** - Network
6. **110** - Cloud Backend
7. **112** - Demilitarized Zone (DMZ)
8. **114** - Blockchain-Based Smart Contract
9. **116** - Charging Station Management System (CSMS)
10. **202** - Step for Receiving a Packet Associated with an Electric Vehicle Charging Session
11. **204** - Step for Detecting the Initiation of the Charging Session
12. **206** - Step for Determining the Sufficiency of Allocated Gas in the Digital Wallet
13. **208** - Step for Generating a Non-Fungible Token (NFT) Linked to the Packet
14. **210** - Step for Controlling Execution of the Charging Session Using the Blockchain-Based Smart Contract

## Claims

1. A computer-implemented method for securing electric vehicle charging communications, the method comprising:
receiving, by a hardware device (104), a packet associated with at least one electric vehicle charging session;
detecting, by the hardware device (104), initiation of the at least one electric vehicle charging session based on one or more parameters within the packet;
determining, by the hardware device (104), sufficiency of an allocated gas amount in a digital wallet (106) associated with the at least one electric vehicle charging session;
generating, by the hardware device (104), a non-fungible token (NFT) linked specifically to the received packet upon determining sufficiency of the allocated gas amount; and
controlling execution of the at least one electric vehicle charging session based on evaluation of the NFT using a blockchain based smart contract (114), wherein execution of the at least one electric vehicle charging session is controlled by selectively dropping one or more suspicious packets based on the evaluation, thereby mitigating distributed denial-of-service (DDoS) attack attempts in electric vehicle charging networks.

2. The method according to claim 1, further comprising:
controlling allocation of gas within the digital wallet (106) based on evaluation of a plurality of operational usage thresholds.

3. The method according to claim 1, further comprising:
detecting, by the blockchain based smart contract (114), an abnormal transmission rate of packets by analyzing one or more NFT-linked packets associated with the at least one electric vehicle charging session.

4. The method according to claim 1, further comprising:
receiving, by the blockchain based smart contract (114) situated within a demilitarized zone (DMZ) (112), an NFT-linked packet, thereby enhancing security of the electric vehicle charging communication.

5. The method according to claim 1, further comprising:
controlling display, by a charging station management system (CSMS) (116), of logged transaction entries indicating NFT-linked blockchain records obtained from the ledger corresponding to the at least one electric vehicle charging session.

6. The method according to claim 3, further comprising:
outputting, by the blockchain based smart contract (114), at least one alert to a charging station management system (CSMS) (116) in response to detecting the abnormal transmission rate.

7. The method according to claim 3, further comprising:
determining, by the blockchain based smart contract (114), authenticity of each NFT linked to the packet transmitted within the at least one electric vehicle charging session by evaluating NFT signatures and gas consumption parameters against predetermined operational thresholds.

8. The method according to claim 7, further comprising:
receiving, by a wallet recharge mechanism, gas usage information derived from available communication channel bandwidths and normal operational patterns of one or more previously processed electric vehicle charging sessions, thereby enabling efficient allocation of gas resources within the digital wallet (106) by administrators of the charging station management system (116).

9. The method according to claim 1, further comprising:
transmitting, by the charging station management system (CSMS) (116), one or more management commands to a electric vehicle charging station (102) corresponding to the logged NFT-linked transaction entries.

10. A system (100) for securing electric vehicle charging communications, the system comprising:
a hardware device (104) configured to receive a packet associated with at least one electric vehicle charging session and detect initiation of the at least one electric vehicle charging session based on parameters in the received packet;
the hardware device (104) further configured to determine sufficiency of an allocated gas amount in a digital wallet (106) and generate a non-fungible token (NFT) linked specifically to the received packet upon determining sufficiency of the allocated gas amount; and
the hardware device further configured to control execution of the at least one electric vehicle charging session based on evaluation of the NFT using a blockchain based smart contract (114), wherein execution of the at least one electric vehicle charging session is controlled by selectively dropping suspicious packets based on the evaluation, and wherein the selective dropping of suspicious packets mitigates distributed denial-of-service (DDoS) attack attempts directed at electric vehicle charging communications.

11. The system according to claim 10, further comprising:
a charging station management system (CSMS) (116) configured to control the allocation of gas to the digital wallet (106) based on evaluation of a plurality of operational usage thresholds.

12. The system according to claim 10, further comprising:
the blockchain based smart contract (114) further configured to detect an abnormal transmission rate of packets by analyzing one or more NFT-linked packets associated with the at least one electric vehicle charging session.

13. The system according to claim 10, further comprising:
the blockchain based smart contract (114) being situated within a demilitarized zone (DMZ) (112) and configured to receive an NFT-linked packet transmitted from the hardware device (104), thereby enhancing security of the electric vehicle charging communication.

14. The system according to claim 10, wherein:
the charging station management system (CSMS) (116) configured to control display of logged transaction entries corresponding to NFT-linked blockchain records obtained from the ledger associated with at least one electric vehicle charging session.
